# EUROPÄISCHE PATENTANMELDUNG

(11) **EP 1 703 177 A2**
(43) Veröffentlichungstag der Anmeldung: **20.09.2006**
(21) Anmeldenummer: 06002787.7
(22) Anmeldetag: 11.02.2006
(51) Int. Cl.: F16H 59/68, F16H 61/30

(54) **Einrichtung zur Druckmessung für eine hydraulische oder pneumatische Stelleinrichtung in einem Automatgetriebe oder einem automatisierten Getriebe**

(30) Priorität: 17.03.2005 DE 102005012259
(71) Anmelder: ZF FRIEDRICHSHAFEN AG, 88038 Friedrichshafen (DE)
(72) Erfinder: Heinzelmann, Karl-Fritz, 88074 Meckenbeuren (DE)

(57) **Zusammenfassung**

Es wird eine Einrichtung zur Druckmessung für eine hydraulische oder pneumatische Stelleinrichtung in einem Automatgetriebe oder einem automatisierten Getriebe vorgeschlagen, wobei die Stelleinrichtung zumindest einen Betätigungszylinder (3, 3') und ein dem Betätigungszylinder (3, 3') zugeordnetes Schaltventil (2, 2') aufweist, umfassend für jeden Betätigungszylinder (3, 3') einen Drucksensor (1, 1'), der zwischen dem zumindest einen Betätigungszylinder (3, 3') der Stelleinrichtung und dem dem Betätigungszylinder (3, 3') zugeordneten Schaltventil (2, 2') angeordnet ist.

## Beschreibung

Die vorliegende Erfindung betrifft eine Einrichtung zur Druckmessung für eine hydraulische oder pneumatische Stelleinrichtung in einem Automatgetriebe oder einem automatisierten Getriebe gemäß dem Oberbegriff des Patentanspruchs 1. Des weiteren betrifft die Erfindung ein Verfahren zur Druckmessung bei Automatgetrieben und automatisierten Getrieben.

Aus der EP 1 067 319 B1 ist eine Einrichtung zum Steuern einer Stelleinrichtung für ein Getriebe bekannt, wobei die Stelleinrichtung eine erste Druckmittelkammer und eine zweite Druckmittelkammer aufweist, die durch einen in Richtung seiner Längsachse bewegbaren Kolben voneinander getrennt sind, und wobei für jede Druckmittelkammer eine erste bzw. eine zweite steuerbare Ventileinrichtung vorgesehen ist, über die die Druckmittelkammer wahlweise mit der Druckmittelquelle oder mit der Druckmittelsenke verbindbar ist; zum Ansteuern der ersten und der zweiten Ventileinrichtung ist eine elektrische Steuereinrichtung vorgesehen.

Des weiteren umfasst die Einrichtung zum Steuern einer Stelleinrichtung eine dritte steuerbare Ventileinrichtung, welche als Absperrventil dient, sowie eine mit der elektrischen Steuereinrichtung verbundene Drucksensoreinrichtung, mittels der der Druck in der ersten und der zweiten Druckmittelkammer messbar ist. Auf diese Weise erfolgt das Ansteuern zumindest einer der steuerbaren Ventileinrichtungen in Abhängigkeit von den Signalen der Drucksensoreinrichtung. Das Sensorsignal wird zur Regelung des Drucks oder zur Überwachung des Versorgungsdrucks verwendet. Vorzugsweise ist die Drucksensoreinrichtung vor der ersten und der zweiten steuerbaren Ventileinrichtung angeordnet.

Bei automatisierten Getrieben wird der Systemdruck üblicherweise über ein Druckbegrenzungsventil eingestellt, wobei es bekannt ist, einen Drucksensor zur Drucküberwachung nach dem Druckbegrenzungsventil und vor den Steuerventilen anzuordnen.

Der vorliegenden Erfindung liegt die Aufgabe zugrunde, eine Einrichtung zur Druckmessung für eine hydraulische oder pneumatische Stelleinrichtung in einem Automatgetriebe oder einem automatisierten Getriebe anzugeben, welche eine direkte Druckmessung im Wirkbereich ermöglicht. Zudem soll ein Verfahren zur Druckmessung für Stelleinrichtungen bei Automatgetrieben und automatisierten Getrieben angegeben werden.

Diese Aufgabe wird für eine Einrichtung zur Druckmessung für eine hydraulische oder pneumatische Stelleinrichtung in einem Automatgetriebe oder einem automatisierten Getriebe durch die Merkmale des Patentanspruchs 1 gelöst. Ein Verfahren zur Druckmessung ist Gegenstand des Patentanspruchs 3. Weitere Ausgestaltungen und Vorteile gehen aus den entsprechenden Unteransprüchen hervor.

Demnach wird eine Einrichtung zur Druckmessung für eine hydraulische oder pneumatische Stelleinrichtung in einem Automatgetriebe oder einem automatisierten Getriebe vorgeschlagen, wobei die Stelleinrichtung zumindest einen Betätigungszylinder und ein dem Betätigungszylinder zugeordnetes Schaltventil aufweist, umfassend zumindest einen Drucksensor, der zwischen dem Schaltventil und dem zumindest einen Betätigungszylinder der Stelleinrichtung angeordnet ist.

Auf diese Weise kann über die Getriebesteuerung der Druck direkt im Wirkbereich, nämlich zwischen dem Betätigungszylinder und dem Schaltventil, gemessen und entsprechend geregelt werden. Die Druckregelung kann in vorteilhafter Weise über getaktete Steuerventile oder ein regelbares Druckbegrenzungsventil erfolgen.

Für den Fall, dass die Stelleinrichtung mehrere Betätigungszylinder umfasst, kann in vorteilhafter Weise für jeden Betätigungszylinder ein Drucksensor vorgesehen sein, der zwischen dem jeweiligen Betätigungszylinder und dem dem Betätigungszylinder zugeordneten Schaltventil angeordnet ist.

Die erfindungsgemäße Einrichtung zur Druckmessung kann bei der Stelleinrichtung zum Schalten der Gänge eines Hauptgetriebes, einer Vorschaltgruppe oder einer Planeten-Nachschaltgruppe eingesetzt werden. Ferner kann sie in vorteilhafter Weise zum Wählen der Gassen, zum Betätigen der Getriebebremse oder zum Steuern einer Kupplung bzw. eines Schaltelementes verwendet werden.

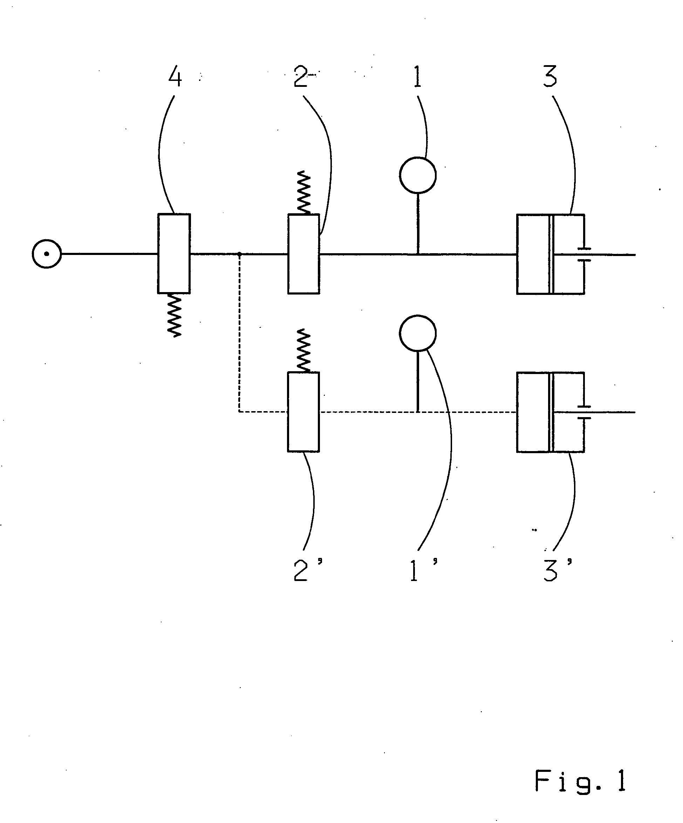

Die Erfindung wird im Folgenden anhand der beigefügten Figur, welche die Anordnung eines Drucksensors innerhalb einer Stelleinrichtung schematisch darstellt, beispielhaft näher erläutert.

Wie der Figur zu entnehmen ist, umfasst die erfindungsgemäße Einrichtung zur Druckmessung einen Drucksensor 1, der zwischen dem Schaltventil 2 und dem Betätigungszylinder 3 der Stelleinrichtung angeordnet ist. Für den Fall, dass mehrere Betätigungszylinder vorgesehen sind, ist zwischen dem jeweiligen Betätigungszylinder 3' und dem dem Betätigungszylinder 3' zugeordneten Schaltventil 2' ein Drucksensor 1' angeordnet. Gemäß der Erfindung ist der zumindest eine Drucksensor 1, 1' mit der Getriebesteuerung bzw. mit einer Steuereinrichtung verbunden, in der die Sensorsignale ausgewertet werden. In der Figur ist das Hauptabschaltventil mit dem Bezugszeichen 4 versehen.

Durch die erfindungsgemäße Konzeption kann der Druck in vorteilhafter Weise direkt im Wirkbereich zwischen dem Betätigungszylinder 3 und dem Schaltventil 2 gemessen und entsprechend geregelt werden, wobei die Druckregelung über getaktete Steuerventile oder über ein regelbares Druckbegrenzungsventil erfolgen kann.

Selbstverständlich fällt auch jede konstruktive Ausbildung, insbesondere jede räumliche Anordnung des Drucksensors und der Elemente der Stelleinrichtung an sich sowie zueinander und soweit technisch sinnvoll, unter den Schutzumfang der vorliegenden Ansprüche, ohne die Funktion der Einrichtung zur Druckmessung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Drucksensor
- 2: Schaltventil
- 2': Schaltventil
- 3: Betätigungszylinder
- 3': Betätigungszylinder
- 4: Hauptabschaltventil

## Patentansprüche

1. Einrichtung zur Druckmessung für eine hydraulische oder pneumatische Stelleinrichtung in einem Automatgetriebe oder einem automatisierten Getriebe, wobei die Stelleinrichtung zumindest einen Betätigungszylinder und ein dem Betätigungszylinder zugeordnetes Schaltventil aufweist, **dadurch gekennzeichnet, dass** sie für jeden Betätigungszylinder (3, 3') einen Drucksensor (1, 1') umfasst, der zwischen dem zumindest einen Betätigungszylinder (3, 3') der Stelleinrichtung und dem dem Betätigungszylinder (3, 3') zugeordneten Schaltventil (2, 2') angeordnet ist.

2. Einrichtung zur Druckmessung nach Anspruch 1, **dadurch gekennzeichnet, dass** der zumindest eine Drucksensor (1, 1') mit der Getriebesteuerung bzw. mit einer Steuereinrichtung verbunden ist, in der die Sensorsignale ausgewertet werden.

3. Verfahren zur Druckmessung für eine hydraulische oder pneumatische Stelleinrichtung in einem Automatgetriebe oder einem automatisierten Getriebe, wobei die Stelleinrichtung zumindest einen Betätigungszylinder und ein dem Betätigungszylinder zugeordnetes Schaltventil aufweist, **dadurch gekennzeichnet, dass** der Druck über zumindest einen Drucksensor (1, 1') im Bereich zwischen dem zumindest einen Betätigungszylinder (3, 3') der Stelleinrichtung und dem dem Betätigungszylinder (3, 3') zugeordneten Schaltventil (2, 2') gemessen wird.

4. Verfahren zur Druckmessung nach Anspruch 3, **dadurch gekennzeichnet, dass** die Signale des zumindest einen Drucksensors (1, 1') an die Getriebesteuerung bzw. an eine Steuereinrichtung übertragen werden, wo sie zur Druckregelung über getaktete Steuerventile oder über ein regelbares Druckbegrenzungsventil verwendet werden.
